# EUROPEAN PATENT APPLICATION

(11) **EP 1 403 767 A1**
(43) Date of publication of application: **31.03.2004**
(21) Application number: 02354146.9
(22) Date of filing: 26.09.2002
(51) Int. Cl.: G06F 11/24

(54) **Method and apparatus for dynamically varying the processor performance**

(71) Applicant: Hewlett-Packard Company, Palo Alto, CA 94304 (US)
(72) Inventor: Meynard, Olivier, 38220 Vizille (FR); Greco, David, 38760 Varces (FR)
(74) Representative: Lloyd, Richard Graham

(57) **Abstract**

The present invention relates to a processor having means for dynamically monitoring and modifying the operating parameters of a processor, such as, for example, the frequency of a clock signal used to drive various functional elements of the processor according to the operating capabilities or operating environment of the processor. Advantageously, the performance of the processor can be varied, or maintained at a maximum, as well as being made to operate at a higher frequency than would previously have been safely possible.

## Description

### Field of the Invention

The present invention relates to a processor and, more particularly, to a processor having dynamically monitored and varying performance.

### Background to the Invention

To ensure that modem processors have a relatively long mean time to failure, they are tested under relatively extreme conditions and then categorised according to the point at which the correct operation of the processor, or class of processors under test, fails. For example, a processor may be subjected to a number of tests and be categorised as a 450MHz processor and marketed as such. The categorisation usually includes a safety margin. Providing the processor is operated at or below this safety margin, one can expect the processor to last a reasonable period of time.

Within some circles the practice of over-clocking has developed. Over-clocking a processor is undertaken in an attempt to extract better performance from the processor than that for which it has been safely categorised. Over-clocking is possible for two reasons. Firstly, all processors have been designed with an inherent safety margin. Secondly, in practice, the actual safety margin may be greater than the designed safety margin due to the less extreme operating conditions of the processor in the field as compared to the relatively harsh operating conditions to which processors are subjected during design and testing. However, the extent to which a processor can be safely over-clocked is unknown and carries the risk of damage to, or early failure of, the processor.

It is an object of the present invention at least to mitigate some of the problems of the prior art.

### Summary of Invention

Accordingly, a first aspect of embodiments of the present invention provides a method of dynamically varying processor operation; the processor comprising a first functional element; the method comprising the steps of monitoring, at a predeterminable time or at predeterminable time intervals, responses of the first functional element to progressively varying test signals anticipated to produce corresponding predictable signals to detect an occurrence of an unpredicted signal; and establishing the operation of the processor according to one of the progressively varying test signals that preceded, or other than, a test signal causing the unpredicted signal.

Advantageously, the performance of the processor can be improved by closely monitoring the performance of an element of the processor when that element is subjected to test signals that should produce a known result and feeding back a point at which the functional element does not produce a predictable result to establish an operating point for the processor that is relatively safe and higher than that for which the processor has been categorised. The embodiments of the present invention may be used to establish the safe Maximum Useable Frequency (MUF) factor of the processor.

In preferred embodiments the predetermined time interval is one of a periodic time interval or an aperiodic time interval.

Since the operating environment of the processor may vary according to the task being performed, or that has recently been performed, the appropriate safety margin may vary. For example, if the processor is undertaking, or has recently undertaken, processor intensive 3-D rendering, the temperature of the processor may be relatively high. This, in turn, will reduce the operating safety margin of the processor. Suitably, the predeterminable time interval is established according to an operating parameter of the processor. Preferably, the operating parameter is the temperature of at least one of the processor, as a whole, or the temperature of the first functional element.

In preferred embodiments, the progressively varying test signals comprise respective progressively increasing frequencies. Preferably, the progressively varying test signals are used as progressively varying clock signals for driving the first functional element.

In some embodiments, the progressively varying test signals comprise a number of static or fixed signals in conjunction with signals having respective progressively increasing frequencies.

The static signals may comprise a fixed data pattern. The progressively varying test signals may comprise a varying data pattern to be fed into the first functional element.

Preferred embodiments provide a method in which the step of establishing the operation of the processor comprises the step of setting a frequency of operation of the processor according to one of the progressively varying test signals that preceded the test signal causing the unpredicted signal.

In preferred embodiments the step of establishing the operation of the processor comprises the step of establishing the operation of the processor according to the test signal that immediately preceded the test signal that caused the unpredicted signal.

In preferred embodiments the processor comprises a second functional element that is identical in operation to the first functional clement. Therefore, embodiments provide a method in which the first functional element forms a critical part of a processing pipeline of the processor and the second functional element docs not form a critical part of the processing pipeline.

Preferably, the first and second functional elements are located sufficiently proximate to each other that the response of the second function element corresponds, to within a predetermined margin, to the response, actual or anticipated, of the first functional element to the progressively varying test signals.

In such an embodiment the first functional element may form part of the main processor whereas the second functional element may be included within the processor solely for the purpose of monitoring the operation of the processor and, more particularly, for monitoring the performance of the corresponding critical functional element of the processor without having to isolate that critical functional element, which would ordinarily interfere with the normal operation of the processor.

Embodiments of the present invention provide a method comprising the step of isolating the first functional element from the remainder of the processor before applying the progressively varying test signals thereto; and re-connecting the first functional element after the step of establishing the operation of the processor according to one of the progressively varying test signals that preceded, or other than, the test signal causing the unpredicted signal.

A second aspect of embodiments of the present invention provides a method for dynamically varying processor operation of a processor comprising a first functional element; the method comprising the steps of monitoring, at a predeterminable time or at predeterminable time intervals, responses of the first functional clement to a plurality of different test signals anticipated to produce corresponding predictable signals to detect an occurrence of an unpredicted signal and establishing the operation of the processor according to one of the plurality of test signals preceding, or other than, the test signal that caused the unpredicted signal.

Preferably, the plurality of different test signals comprises a plurality of progressively varying test signals.

A third aspect of embodiments of the present invention provides a processor comprising a first functional element; a pattern generator for applying to the first functional element a plurality of different test signals anticipated to produce respective predictable responses from the first functional element, a monitor to monitor, at least twice, responses of the first functional element to the plurality of different test signals; and a controller for dynamically establishing the operation of the processor according to one of the plurality of different test signals preceding, or other than, the test signal that caused the unpredictable response.

Preferably, the plurality of different test signals comprises a plurality of progressively varying test signals. In preferred embodiments, the pattern generator generates test signals comprising known data patterns. Alternatively or additionally, the pattern generator may generate test signals having progressively varying frequencies.

Embodiments also provide a processor further comprising a timer for generating a periodic signal in response to which the pattern generator, the monitor and the controller co-operate to establish operating parameters of the processor dynamically.

It will be appreciated that it may not be desirable to have the processor operating under maximum performance conditions. Therefore, embodiments provide for the MUF factor to have a predetermined margin. For example, the MUF factor margin may be 10%.

Further embodiments provide a method of dynamically varying processor operation; the processor comprising a first functional element; the method comprising the steps of monitoring, at a predeterminable time or at predeterminable time intervals, responses of the first functional element to progressively varying test signals anticipated to produce corresponding predictable signals to detect an occurrence of an unpredicted signal; and establishing the operation of the processor according to one of the progressively varying test signals that did not cause the unpredictable signal.

Still further embodiments provide a computer program element comprising code for implementing a system or method as described in this specification and a computer program product comprising non-volatile storage storing such a computer program element.

### Brief Description of the Drawings

Embodiments of the present invention will now be described, by way of example only, with reference to the accompanying drawings in which:
figure 1 illustrates schematically a processor having a number of pipelines;
figure 2 illustrates a first embodiment of part of a processor; and
figure 3 illustrates a second embodiment of part of a processor.

### Detailed Description of the Preferred Embodiments

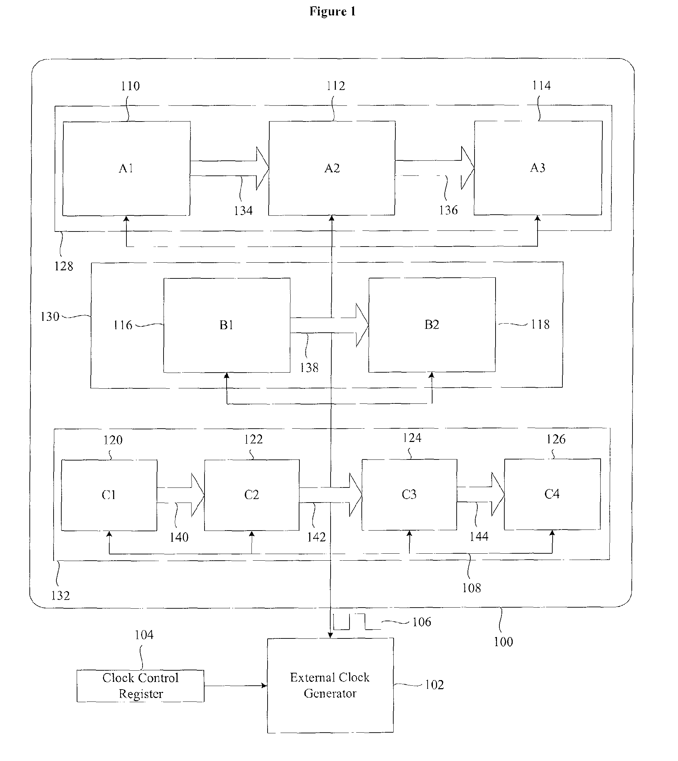

Figure 1 shows, schematically, a processor 100 that is fed via a programmable clock generator 102. A clock control register 104 controls the frequency of operation of the clock generator. The clock generator 102 generates a clock signal 106 that is distributed via a clock distribution network 108 to a number of functional elements 110 to 126 of the processor.

The functional elements 110 to 126 are, in the illustrated example, arranged into three pipelines. The first pipeline 128 comprises three functional elements 110 to 114. A second pipeline 130 comprises first 116 and second 118 functional elements and a third pipeline 132 comprises four functional elements; namely, functional elements 120 to 126. The pipelines lines may perform any desired function.

The functional elements of each of the pipelines perform respective data processing or signal conditioning functions and arc driven by the clock signal 106 distributed by the clock distribution network 108.

It can be seen that respective buses or lines 134 to 144 connect respective functional elements within a pipeline. The buses or lines 134 to 144 convey data or signals from one functional element within a pipeline to the next.

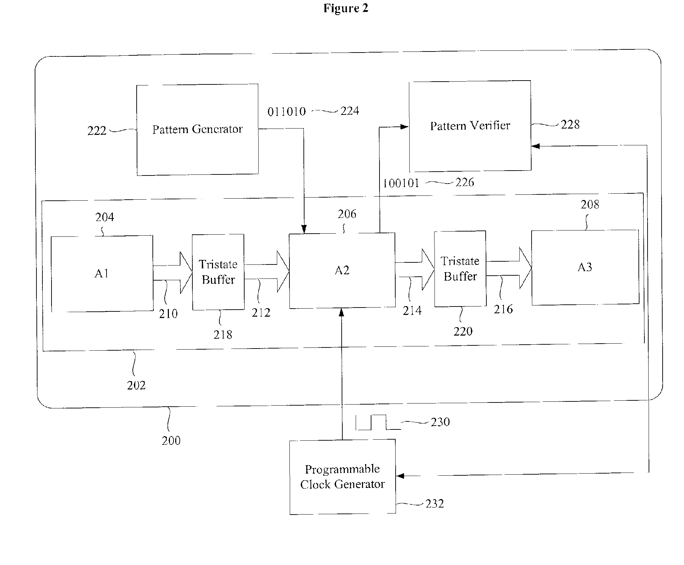

Referring to figure 2, there is shown a portion 200 of a processor (not shown) according to a first embodiment. The processor portion 200 comprises a processing pipeline 202 that has, for the purpose of illustration only, three functional elements 204 to 208. The functional elements 204 to 208 are connected via a combination of buses 210 to 216 and a pair of tri-state buffers 218 and 220. Within this pipeline 202, it is assumed that the second functional element 206 is the most critical functional element of that pipeline, that is, the maximum performance of the pipeline is governed by the maximum performance of the second functional element 206. In effect, the second functional element 206 is assumed to represent a bottleneck for the pipeline 202. Therefore, the tri-state buffers 218 and 220, in response to appropriate signals (not shown), are arranged to isolate the second functional element 206 from the pipeline. It will be appreciated that the pipeline 202 cannot be used during any such isolation.

Once the second functional element 206 has been isolated, a pattern generator 222 is arranged to apply a known signal or data pattern 224 to the second functional element 206. The known signal or data pattern 224 is anticipated to produce a predictable response. The actual response is monitored by a pattern verifier 228. The pattern verifier 228, knowing the function performed by the second functional element 206 and the test signal 224 applied to that functional element 206, determines whether, for a given frequency of operation or driving clock signal 230 produced by the programmable clock generator 232, the second functional element 206 is operating correctly. The signal 224 produced by the pattern generator 222 and the driving clock signal 230 produced by the programmable clock generator 232 represent, when taken as a whole, a test signal for which the response of the second functional element 206 is monitored by the pattern verifier 228.

Assuming that the pattern verifier 228 determines that the response of the second functional element 206, that is, its output signal 226, is as expected, the programmable clock generator 232 is instructed to generate a clock signal 230 having a slightly higher frequency as compared to the previously generated clock signal. It can be appreciated that the pattern verifier also functions as a controller for controlling the operation of the programmable clock generator.

The increase in frequency can be set to any arbitrary amount, which may be a variable or fixed arbitrary amount. Alternatively, or additionally, the change in frequency may be varied according to an algorithm such as, for example, a binary split, in an attempt to converge rapidly upon an acceptable operating frequency.

Having established a new operating frequency for the clock signal 230, the response 226 of the second functional element 206 to the signal 224 generated by the pattern generator 222 is, again, noted by the pattern verifier 228. If the pattern verifier 228 determines that the response signal 226 is as predicted, the programmable clock generator 232 is, again, arranged to increase the frequency of the clock signal 230 and the process of testing the second functional element is repeated.

The process of applying such progressively varying test signals and noting the responses 226 of the second functional element 206 to those progressively varying test signals is repeated until the response of the second functional element 206 is not as predicted. The pattern verifier 228, having noted an unpredicted response 226, sets the programmable clock generator 232 to generate a clock signal 230 having a frequency corresponding to one of the previous frequencies of operation that did not cause an unpredictable response. Preferably, the frequency of the clock signal 230 is set to that frequency that immediately preceded the one that caused the unpredictable response.

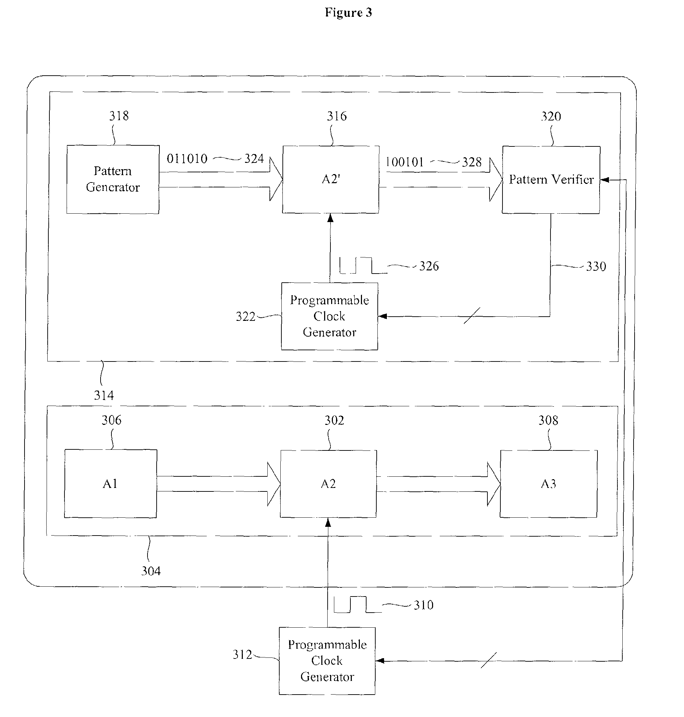

Referring to figure 3, there is shown a second embodiment of a processor 300. The processor 300 comprises a functional element 302, which, in the illustrated embodiment, forms a critical part of a processing pipeline 304 that includes two other functional elements 306 and 308. The functional element 302 receives a driving clock signal 310 from a programmable clock generator 312.

The processor 300 also comprises a test portion 314 that is used to monitor and establish the operating conditions for the processor 300. The test portion 314 comprises a second functional element 316 that performs the same function as the first functional element 302. The test portion 314 also comprises a pattern generator 318 and a pattern verifier 320 as well as a programmable clock generator 322.

The pattern generator 318 is arranged to feed a test signal or test data 324 to the second functional element 316 concurrently with the programmable clock generator 322 feeding a clock signal 326, having a predetermined frequency, to the second functional element 316. The data 324 together with the clock signal 326 form one test signal of a number of different or progressively varying test signals that arc used to test the performance of the second functional element 316.

The second functional element 316 produces an output or response signal 328 that is fed to the pattern verifier 320. The pattern verifier, knowing the format of the data 324 produced by the pattern generator 318 and the function performed by the second functional element 316, determines if the response signal 328 produced by the second functional element 316 is as expected or as predicted.

Assuming that the pattern verifier 320 verifies that the response signal 328 is as predicted, a control signal 330 is sent to the programmable clock generator 322 to increase the frequency of the clock signal 326 by a predetermined or predeterminable amount. This process, that is, the generation of progressively varying test signals for application to the second functional element 316 and the assessment of the response 328 of the second functional element 316 by the pattern verifier 320 is repeated until the response signal is not as predicted or anticipated.

Having reached, in effect, the threshold of the performance the second functional clement 316 determined by the occurrence of an unpredicted signal or response, the pattern verifier 320 instructs the programmable clock generator 312 to generate a clock signal 310 having a frequency that corresponds to one of the frequencies of the previously generated clock signals 326 that did not cause an unpredictable signal 328. In preferred embodiments, the frequency selected for the clock signal 310 is the one that immediately preceded the frequency causing the unpredictable signal 328 occurred, that is, the highest frequency that did not cause an unpredicted response.

It will be appreciated that the assumption is that the performance of the first functional element 302 will be the same as that of the second functional element 316. This assumption may be particularly valid if the first 302 and second 316 functional elements operate within substantially the same operating environment. This can be achieved, in part, by ensuring that the first 302 and second 316 functional elements are located as close as practicable to one another within a processor.

It will be appreciated by one skilled in the art that it may not be practical to use a second functional element 316 that is identical in structure and function to the first functional element 302 in circumstances where the first functional element 302 occupies a relatively large area of the processor 300. For example, if the first functional element 302 implements a 64-bit multiplier, it will occupy a relatively large area of silicon. In such circumstances, it is not practical for the second functional element 316 also to implement a 64 bit multiplier as to do so would result in a significant amount of the silicon area of the processor being dedicated to testing functions rather than being dedicated to a main function of the processor. Therefore, embodiments are provided in which the first 302 and second 316 functional elements do not perform exactly the same function, or do not have the same structure, size or fabrication cost and the pattern verifier takes this into account when instructing the first programmable clock generator 312 to generate the clock signal 310 at an appropriate frequency.

Although the above embodiments have been described with reference to the pattern generator producing a static or fixed signal, embodiments of the present invention are not limited to such an arrangement. Embodiments can be realised in which the pattern generator is arranged to produce a time varying signal.

Although the above embodiments have been described with reference to the progressively varying test signals having progressively increasing frequencies, that is, the clock signal being progressively increased in frequency, embodiments are not limited to such an arrangement. Embodiments can be realised in which the initial frequency of the clock signal, or the progressively varying test signal, is set to a relatively high value and the pattern verifier instructs the programmable clock generator to decrease the frequency of the clock signal progressively. In such embodiments, rather than the pattern verifier having to remember a previous clock signal frequency that produced a successful response, the pattern verifier can continue to decrease the frequency of the clock signal until a predictable response is received from the functional element under test. The pattern verifier can then merely terminate the testing operation leaving the programmable clock generator set to produce a clock signal having the frequency that resulted in the predictable response signal.

Furthermore, it will be appreciated that embodiments of the present invention can be realised to test portions of a processor that do not form part of a pipeline even though the embodiments have been described above with reference to such pipelines.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A method of dynamically varying processor operation; the processor comprising a first functional element; the method comprising the steps of monitoring, at a predeterminable time or at predeterminable time intervals, responses of the first functional element to progressively varying test signals anticipated to produce corresponding predictable signals to detect an occurrence of an unpredicted signal; and establishing the operation of the processor according to one of the progressively varying test signals preceding, or other than, the test signal that caused the unpredictable signal.

2. A method as claimed in claim 1, in which the predetermined time interval is a periodic time interval.

3. A method as claimed in claim 1, in which the predetermined time interval is an aperiodic time interval.

4. A method as claimed in claim 1, in which the predeterminable time interval is established according to an operating parameter of the processor.

5. A method as claimed in claim 4, in which the operating parameter is the temperature of at least one of the processor or the first functional element.

6. A method as claimed in any preceding claim, in which the progressively varying test signals comprise respective progressively increasing frequencies.

7. A method as claimed in any preceding claim, in which the step of establishing the operation of the processor comprises the step of setting a frequency of operation of the processor according to one of the progressively varying test signals that preceded, or other than, the test signal causing the unpredicted signal.

8. A method as claimed in claim 7, in which the step of establishing the operation of the processor comprises the step of establishing the operation of the processor according to the test signal immediately preceding the test signal that caused the unpredicted signal.

9. A method as claimed in any preceding claim, in which the processor comprises a second functional element identical or different in operation to the first functional clement.

10. A method as claimed in claim 9, in which the second functional element forms a critical part of a processing pipeline of the processor and the first functional element does not form a critical part of the processing pipeline.

11. A method as claimed in either of claims 9 and 10, in which the first and second functional elements are located sufficiently proximate to each other that the response of the second functional element corresponds to with a predetermined margin to the response of the first functional element to the progressively varying test signals; the step of establishing the operation of the processor comprising the step of establishing the operation of the second functional element according to the performance of the first functional element.

12. A method as claimed in any preceding claim, further comprising the step of isolating the first functional element from the remainder of the processor before applying the progressively varied test signals thereto; and re-connecting the first functional element after the step of establishing the operation of the processor according to one of the progressively varying test signals that preceded the test signal causing the unpredicted signal.

13. A method of dynamically varying processor operation; the processor comprising a first functional element; the method comprising the steps of monitoring, at predeterminable time intervals, responses of the first functional element to a plurality of different test signals anticipated to produce corresponding predictable signals to detect an occurrence of an unpredicted signal; and establishing the operation of the processor according to one of the plurality of test signals preceding, or other than, the test signal that caused the unpredicted signal.

14. A method as claimed in claim 13, in which the plurality of different test signals comprises a plurality of progressively varying test signals.

15. A processor comprising a first functional element; a pattern generator for applying to the first functional element a plurality of different test signals anticipated to produce respective predictable responses from the first functional element, a monitor to monitor, at least twice, responses of the first functional element to the plurality of different test signals; and a controller for dynamically establishing the operation of the processor according to one the plurality of different test signals preceding the test signal that caused the unpredictable response.

16. A processor as claimed in claim 15, in which the plurality of different test signals comprises a plurality of progressively varying test signals.

17. A processor as claimed in either of claims 15 and 16, further comprising a timer for generating a periodic signal in response to which the pattern generator, the monitor and the controller co-operate to establish the operation of the processor dynamically.

18. A processor as claimed in any of claims 15 to 17, in which the progressively varying test signals comprises at least one of a variable frequency signal and a fixed pattern input test signal.

19. A method of dynamically varying processor operation; the processor comprising a first functional clement; the method comprising the steps of monitoring, at a predeterminable time or at predeterminable time intervals, responses of the first functional element to progressively varying test signals anticipated to produce corresponding predictable signals to detect an occurrence of an unpredicted signal; and establishing the operation of the processor according to one of the progressively varying test signals that did not cause the unpredictable signal.

20. A computer program element comprising code for implementing a system or method as claimed in any preceding claim.

21. A computer program product comprising non-volatile storage storing a computer program element as claimed in claim 20.
